# EUROPEAN PATENT APPLICATION

(11) **EP 2 963 764 A1**
(43) Date of publication of application: **06.01.2016**
(21) Application number: 14175357.4
(22) Date of filing: 02.07.2014
(51) Int. Cl.: H02J 7/00, H01M 2/34, H02H 11/00

(54) **Apparatus to provide reverse polarity protection**

(71) Applicant: Delphi Technologies, Inc., Troy MI 48007 (US)
(72) Inventor: Voigt, Wolfgang, 44867 Bochum (DE); Parras, Karl-Heinz, D-90459 Nurnberg (DE)
(74) Representative: Neill, Andrew Peter

(57) **Abstract**

An apparatus configured to protect one or more system components from damage due to reverse polarity connection of a power supply (14) comprising a relay (10) located between said power supply (14) and said components, and adapted to detect when a power supply is provided with reverse polarity and to consequently switch the relay (10) to an open state to isolate said power supply (14) from said components.

## Description

### Field of the Invention

This disclosure relates to vehicle systems and particularly to an efficient arrangement which provides protection to vehicle systems and components if the vehicle battery or power supply is connected the wrong way round, that is to say protection from reverse polarity.

### Background to the Invention

A car battery may be inadvertently connected to the car wiring the wrong way round, i.e. with the wrong polarity. For example, during a jumpstart procedure, a second, external battery.is connected to the terminals of the main battery, so as to provide a supporting voltage source during the cranking period. Accidental connection to the car wiring in reverse polarity may occur. As electronic devices are becoming important as integral parts of vehicles in greater quantities, there is a need for special provisions in each electronic device to avoid damage to circuitry and components as a result of inadvertent reverse voltage at the power supply lines.

It is common practice, when dealing with low or medium currents, where the power loss and heat generation is low, to provide protection by inserting a serial diode between the power supply and component/circuit. A problem with this however is that these simple diodes cause functional power loss during normal operation of the devices; the power loss equal to the forward voltage drop of the corresponding diode multiplied by the average current flowing.

Power semiconductors (even in power distribution boxes) are being used more and more nowadays as substitutes for mechanical relays and also for fuse functionability. It is common to use power FETs in such devices as they provide a very low ON-Resistance down to 0.5 to 1 mn and are able to carry a huge amount of permanent drain current in the range of 50 A to 100 A. A typical power FET becomes conductive via its intrinsic diode when connected in reverse polarity. This has to be avoided because high current leads to a very high power loss in the reverse diode of the FET. The consequential power dissipation may be 50 or even 100 W and would destroy the· FET by overheating in a very short time leading to a great risk of fire hazard.

To overcome this problem a second power FET is known to implemented in series arranged in opposite directions (with source of the first transistor connected to the source of the second one) to each FET switch to avoid reverse current flow. This leads inevitably to doubling of the resulting ON resistance, power loss and material costs.

It is an object of the invention to provide improved a circuitry to protect vehicle systems and component from damage as a result of inadvertent reverse polarity connection. It is a further object to provide protection which reduces power consumption of traditional solutions during normal and protective operation.

It is a further object to provide a central autonomous solution to get rid of the above mentioned problems with reverse battery which avoids additional power losses in the active state and shows a negligible power consumption in inactive or sleep mode.

### Statement of the Invention

In one aspect is provided an apparatus configured to protect one or more system components from damage due to reverse polarity connection of a power supply comprising a relay located between said power supply and said components, and adapted to detect when a power supply is provided with reverse polarity and to consequently switch the relay to an open state to isolate said power supply from said components.

The apparatus may be adapted to detect when said power supply is connected with correct polarity and means to consequently switch the relay to a closed state if open.

The relay may be a latching relay used for purposes other than reverse polarity detection.

Said relay may include one or more coils connected to the power supply line via a first switch (M3), said first switch being connected to means to detect reverse polarity, adapted to be switched on to drive current through the coils to open the relay on detection of reverse polarity.

Said relay may include a SET and a RESET coil arranged in parallel and connected to said first switch such that when said reverse polarity current is detected, current is driven through the coils in opposite directions so that said coils both act in synergy to open the relay.

Said adaptation to detect reverse polarity may include capacitor means connected to said power line between the relay and the components and adapted to be charged as a consequence of reverse polarity to provide a voltage level, which when achieved is adapted to activate said first switch (M3).

Said first switch may be a power FET and further said apparatus may include a first intermediate switch means (Q1) located between said capacitor and so as to switch said on said first switch means (M3) when said voltage level is achieved.

Said apparatus may include a diode arranged in parallel with the coil(s) adapted to absorb coil energy when said fist switch means is switched to an OFF state.

Said means to detect when said power supply is connected with correct polarity and means to consequently switch the relay to an closed state if open, may comprise second switch means (M2) adapted to be switched on detection of correct polarity, to send current through the relay coils(s) in a direction so as to close the relay.

Said relay may includes a SET and a RESET coil arranged in parallel and connected to said second switch means such that when correct polarity is detected, current is driven through the coils in opposite directions so that said coils both act in synergy to close the relay.

The detection means may include a second intermediate switch means (Q2) located between the power line and second switch and having connection to the both sides of the power line with respect to the relay contacts, and adapted to switch on said second switch on detection of the correct polarity.

Said intermediate switches may comprise transistors and or said first and second switches comprise power transistors/FETs.

### Brief Description of Drawings

The invention will now be described with reference to the following figures of which:
Figure 1 shows a schematic representation of how components and systems of a vehicle are protected in prior art systems.
Figure 2 shows a schematic circuit diagram showing such the use of a relay in known systems.
Figure 3 shows a basic example of the invention
Figure 4 shows the circuitry used in one example.

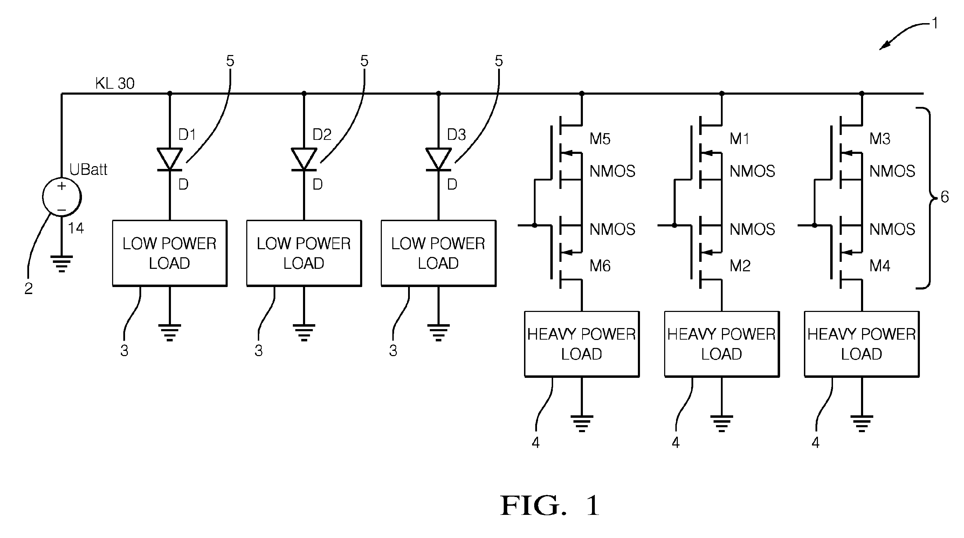

Figure 1 shows a schematic representation of how components and systems of a vehicle are protected in prior art systems. The circuit 1 shows a power supply i.e. battery 2, which may be falsely connected i.e. with reverse polarity. The battery can supply power to one or more low power loads 3 or one or more high power loads 4. To protect the low power loads diodes 5 are used between the power supply and the low power loads (components). To protect the high power loads (components and devices) an additional FET is provided to an existing FET to provide a pair of FETs 6 arranged in series. So second power FET is implemented in series but in arranged in the opposite direction to each other (with source of the first transistor connected to the source of the second one) to avoid reverse current flow. As mentioned this leads inevitably to doubling of the resulting ON resistance, power loss and material costs.

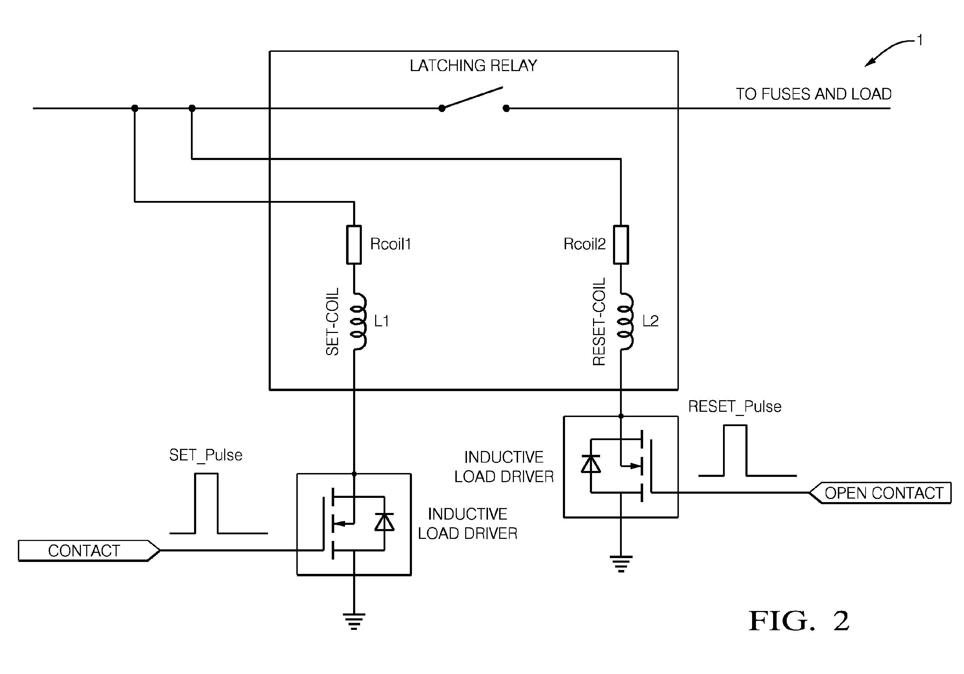

It is known to use latching relays in vehicle systems located between the battery and the fuses and loads of vehicle systems for purposes other than to prevent damage form reverse polarity connection. Figure 2 shows a schematic circuit diagram showing such a system. The relay 7 is operated by a SET coil L1 (in series with coil resistor Rcoil 1) and a RESET coil L2 (in series with resistor Rcoil2). The latching relay is controlled by SET and RESET pulses sent to inductive load drives. These control the currents sent through the coils which in turn open/close the latching relay.

### Detailed Description of the Invention

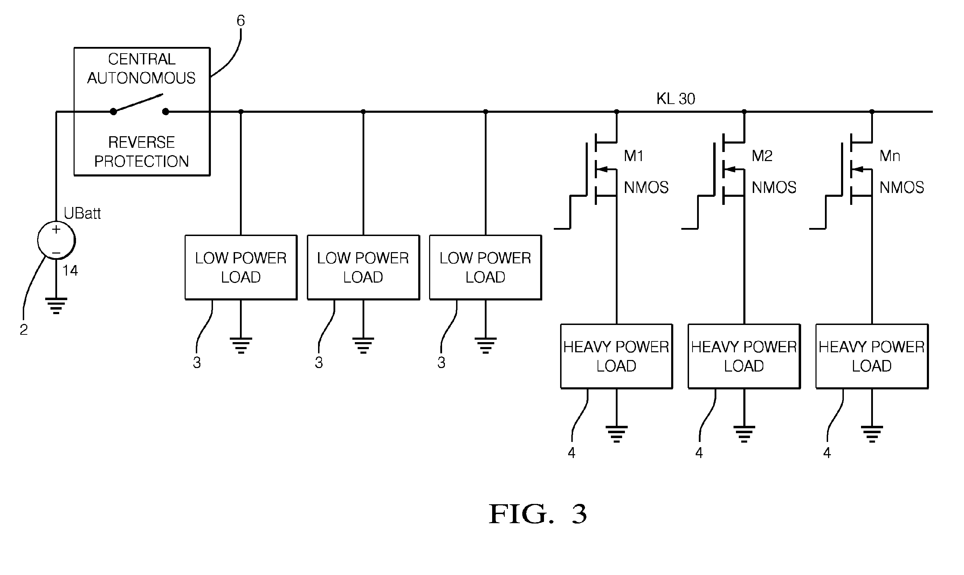

Figure 3 shows a basic example of the invention. In essence a central autonomous reverse protection circuit/system is provided between the battery 2 and the components/loads 3 /4 which obviates the need for the additional diodes with respect to the low loads and the extra FET for the high power loads. In one aspect a latching relay 6 is used to provide reverse polarity protection.

In a preferred embodiment the latching relay present on current vehicle systems is used to provide reverse polarity protection. In one aspect additional latching relay circuitry is used to implement control of the latching relay with respect reverse polarity protection.

Thus in a simple example a latching power relay is thus used as a "protection switch" which is arranged to open in a very short time after voltage reversal to isolate all sensitive electronic circuits from the power supply line. A latching relay will not consume power during steady ON or OFF state. This provides a big advantage in comparison with using protection diodes in the power lines or implementing a second "opposite" FET in electrolytic power switches for high currents.

An appropriate electronic circuit is provided to achieve fast opening of the protection switch in case of voltage reversal and closing of the switch- as soon as the battery voltage is applied with proper polarity again. A very harsh requirement for the monitoring circuit is the low operating voltage for both polarities of 3.4 V maximum.

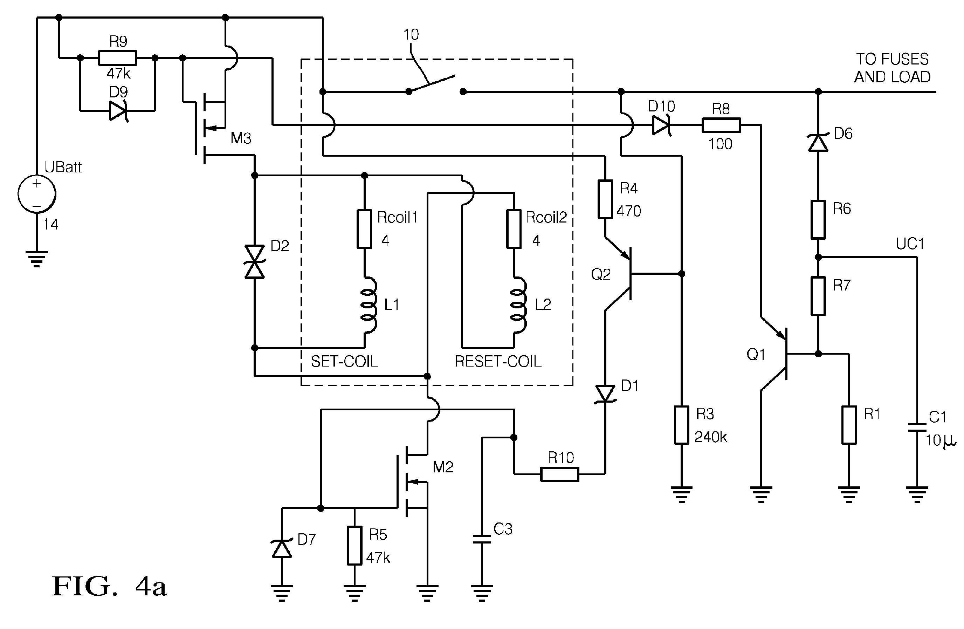

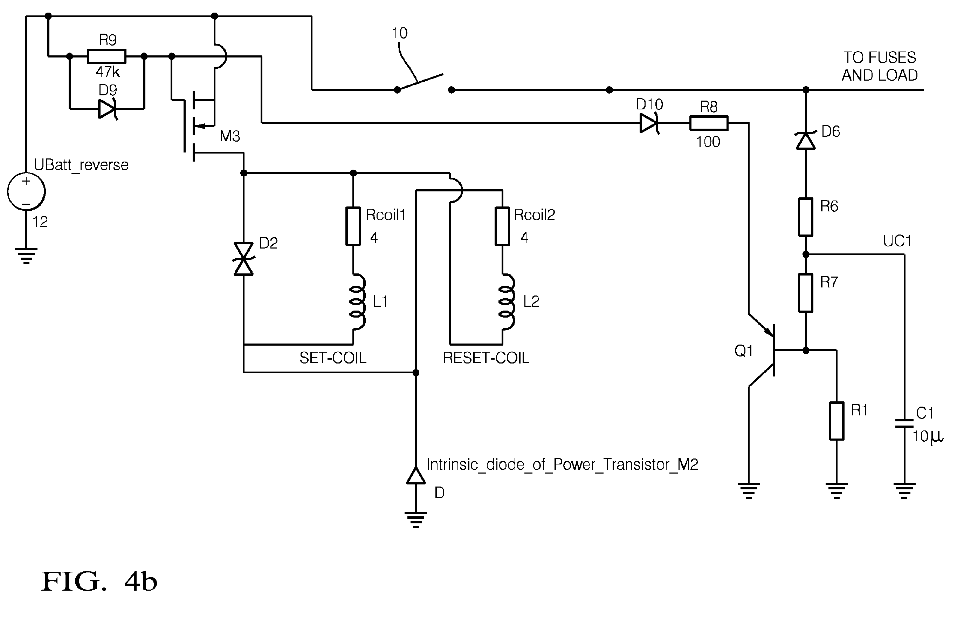

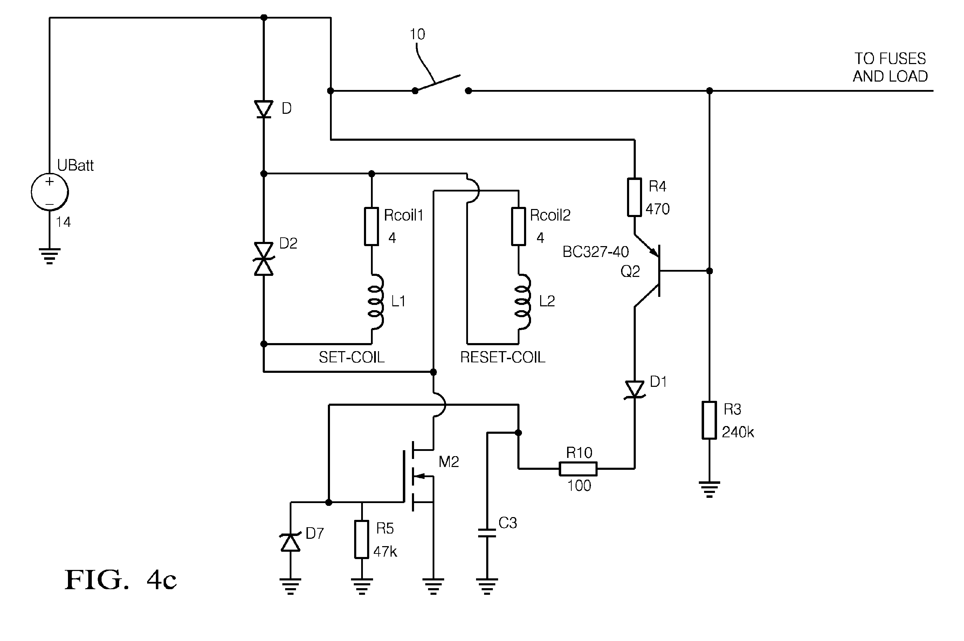

Figures 4a, b, and c show a detailed example of circuitry which uses a relay to provide reverse polarity protection in one example.

Figure 4a shows the overall circuitry which is used in one example. Figures 4b and 4c show portions of the circuitry of the figure 4a circuit but with selective portions missing for clarity purposes so as to help explain how the individual portion of the circuit operate.

In general the circuitry includes a latching relay 10 which may for example be a Gruner 750. The relay is operated by coils L1 and L2. Although in the figure the relay and the coils L1 and L2 appear separately for clarity purposes they are co-arranged. The coils thus may be regarded as part of the relay and so the relay and coils to operate the relay are shown in dashed lines to indicate they are co-located. The coils are in series with resistors Rcoil1 and Rcoil2. The battery/power supply 2 which may be reversely connected is shown.

The additional circuitry will now be described together its operation to provide reverse polarity protection. For better understanding, as mentioned, the circuit is divided in two functional parts shown by figures 4b and c respectively. Figure 4b shows the circuitry to provide quick opening of the relay contact in case of reverse polarity and figure 4c shows the circuitry to provide for closing the relay contact after establishing the right polarity again.

### Opening of the Relay Contacts in Case of Reverse Battery Polarity

The circuitry is figure 4b shows the circuitry which is used to open the relay if the power supply is connected the wrong way round. It is assumed that the latching relay contacts have been permanently closed during a normal operating period, either in sleep or in active mode. As soon as the resulting battery voltage (may be during jump start) is accidentally reversed, a capacitor C1 is loaded quickly by current flow through a Zener diode D6 and resistor R6 arranged in series from a line from the main power supply line to the vehicle components/systems. A line from the capacitor is fed via resistor R7 to the base of a transistor Q1 which is otherwise also connected via Zener diode D10 and resistor R8 (the latter two components arranged in series), and resistor R9 and diode D6 (these being arranged in parallel) to the power supply line. When the base-emitter-voltage of Q1 reaches the base-emitter-tum-on-level, Q1 is switched on rapidly and generates a sufficient gate voltage for a Power FET M3 (supplied via a connection from the power line) by driving the collector current through R8, D10 and R9. The power FET M3 is fed from battery supply line and provides a high current to pass through the relay coils Rcoil1 and Rcoil2. If the reverse battery voltage is very high, the gate voltage of M3 is safely limited by the diode D9 (optional).

When M3 is switched to the ON-state it drives its drain current through the parallel connected coils (Rcoil1 and Rcoil2) of the latching relay and the intrinsic diode of Power FET M2. This very sharp current pulse opens the relay contact momentarily. Typically for a Gruner 750 relay the action time is 10 ms. It is to be noted that the current is arranged to flow in the SET and RESET coil by the circuitry such that they act to provide latching/unlatching force in the same direction during this operation.

To avoid repetitive bouncing of the relay contacts, the coil currents may be extended for some 20 ms to 30 ms by sustaining a sufficient base current for Q1 out of the charge reservoir of capacitor C1 even after opening of the latching contact. This time can be regarded as prolongation time. Suppressor diode D2 preferably functions as a freewheeling diode to absorb the energy of the coils during the time when M3 is switched to the OFF state (preferred).

### Closing the Relay Contacts again after Applying Correct Battery Polarity

It is assumed that the latching relay contacts have been opened during a reverse polarity event. The additional circuitry used to control closing is shown in figure 4c. As soon as the battery voltage is present with the correct polarity a base current is driven through transistor Q2 (which is connected via resistor R4 from a connection to the power supply line) via base resistor R3 (and eventually via additional load resistors in parallel). Q2 is switched into saturation causing a sufficient gate voltage for Power FET M2 by driving the collector current through D1, R10 and R5. FET M2 is provided and connected to one side of each coil and allows high current to pass through the coils. In order to protect the circuitry, if the battery voltage was very high, the gate voltage of M2 is safely limited by a diode D7. When M2 is switched to into its ON-state, it drives its drain current through the parallel connected coils of the latching relay and the intrinsic diode of Power FET M3. This very "sharp" current pulse closes the relay contacts. This can be achieved with a Gruner 750 relay in 10ms. As soon as the relay contact is closed, base and emitter of Q2 are connected by the closed contact itself and the base current for transistor Q2 stops. Transistor Q2 goes into Off state, and the gate voltage of M2 is falls below the threshold voltage turning M2 into Off state also. Optional suppressor diode D2 functions as a freewheeling diode to absorb the energy of the coils in the moment when M2 is switched to the Off state.

The above example is by way of example only and the skilled person could readily envisage alternative arrangements to provide the requisite functionality.

As mentioned a Gruner 750 relay may be used which is designed for a continuous Current of 100 A at an ambient temperature of 105 °C. In-rush current can be as high as 550 A, short time overload current is defined with an amount of 3.000 A, maximum make/brake current is 1.500 A. Other type of latching relay may be implemented using the same circuit principle and/or design goals. The Gruner 750 provides two coils, one for setting and one for resetting the contact. The standard nominal operating voltage of these coils is 6 to 16 V. As a trigger voltage of 3.4 V or lower is mandatory for the protection switch. In the example above a relay design such as the Gruner 750 provides both SET and RESET coils and a particular advantage of the circuits described above is to use both coils for forced setting or resetting. Thus this doubles the magnetic flux in the armature. The circuitry as shown provides the polarity of the SET coil voltage to be inverted with respect to that for the REST coil so that both coils work in the same direction. This provision would lead to for example a trigger voltage of 3.0 Volt.

As in some circumstances voltage drops in the trigger circuitry (diode forward voltage drop, saturation 'voltage of transistors) cannot be avoided, a relay modification with lower coil resistances of 4Ω (Standard 10 Ω) can be provided to compensate for these losses.

In certain examples an important item of the invention is the inherent feedback function concerning the contact position, which leads to a much better operational reliability. If the contact is open -with normal polarity of the battery voltage, the coil current is provided continuously until the contact is closed totally. 1f the contact is closed with reversed polarity of the battery, the coil current is provided .continuously at least (plus prolongation time) until the contact is totally open. Using the intrinsic diode of M3 to close the current path when M2 is in ON state (and vice versa) eliminates in a simple way the need for additional diodes.

## Claims

1. An apparatus configured to protect one or more system components from damage due to reverse polarity connection of a power supply comprising a relay located between said power supply and said components, and adapted to detect when a power supply is provided with reverse polarity and to consequently switch the relay to an open state to isolate said power supply from said components.

2. An apparatus as claimed in claim 1 adapted to detect when said power supply is connected with correct polarity and means to consequently switch the relay to a closed state if open.

3. An apparatus as claimed in claim 1 where said relay is a latching relay used for purposes other than reverse polarity detection.

4. An apparatus as claimed in claims 1 to 3 wherein said relay includes one or more coils connected to the power supply line via a first switch (M3), said first switch being connected to means to detect reverse polarity, adapted to be switched on to drive current through the coils to open the relay on detection of reverse polarity.

5. An apparatus as claimed in claim 4 wherein said relay includes a SET and a RESET coil arranged in parallel and connected to said first switch such that when said reverse polarity current is detected, current is driven through the coils in opposite directions so that said coils both act in synergy to open the relay.

6. An apparatus as claimed in claim 1 to 5 wherein said means to detect reverse polarity includes capacitor means connected to said power line between the relay and the components and adapted to be charged as a consequence of reverse polarity to provide a voltage level, which when achieved is adapted to activate said first switch (M3).

7. An apparatus as claimed in any preceding claim wherein said first switch is a power FET and further said apparatus includes a first intermediate switch means (Q 1) located between said capacitor and so as to switch said on said first switch means (M3) when said voltage level is achieved.

8. An apparatus as claimed in any preceding claim including a diode arranged in parallel with the coil(s) adapted to absorb coil energy when said fist switch means is switched to an OFF state.

9. An apparatus as claimed in any preceding claim where said means to detect when said power supply is connected with correct polarity and means to consequently switch the relay to an closed state if open, comprises second switch means (M2) adapted to be switched on detection of correct polarity, to send current through the relay coils(s) in a direction so as to close the relay.

10. An apparatus as claimed in any preceding claim wherein said relay includes a SET and a RESET coil arranged in parallel and connected to said second switch means such that when correct polarity is detected, current is driven through the coils in opposite directions so that said coils both act in synergy to close the relay.

11. An apparatus as claimed in any preceding claim wherein detection means includes a second intermediate switch means (Q2) located between the power line and second switch and having connection to the both sides of the power line with respect to the relay contacts, and adapted to switch on said second switch on detection of the correct polarity.

12. An apparatus as claimed in any preceding claim wherein said intermediate switches comprise transistors and or said first and second switches comprise power transistors/FETs.
